# EUROPEAN PATENT SPECIFICATION

(11) **EP 1 732 295 B1**
(45) Date of publication and mention of the grant of the patent: **10.08.2016**
(21) Application number: 06011726.4
(22) Date of filing: 07.06.2006
(51) Int. Cl.: H04M 1/27, H04M 1/725

(54) **Device and method for sending and receiving voice call contents via text messages**
Vorrichtung und Verfahren zum Senden und Empfangen von Gesprächsinhalten einer Sprachverbindung mittels Textnachrichten
Dispositif et méthode pour envoyer et recevoir le contenu d'une conversation téléphonique au moyens de messages textes

(30) Priority: 10.06.2005 KR 20050050017
(43) Date of publication of application: 13.12.2006
(73) Proprietor: LG Electronics Inc., Yeongdeungpo-gu Seoul 150-721 (KR)
(72) Inventor: Yang, Sung-Zoon, Nam-Gu, Incheon (KR)
(74) Representative: Katérle, Axel

(56) References cited:
- WO-A-02/077975
- US-A1- 2003 045 329
- US-A1- 2005 065 791
- US-B1- 6 813 601

## Description

### BACKGROUND OF THE INVENTION

### 1. Field of the Invention

The present invention relates to a mobile communications terminal, and particularly, to a device and method for sending and receiving voice call contents which is capable of sending and storing voice call contents.

### 2. Background of the Invention

In general, a voice recognition is executed such that a speaker's voice waveform is analyzed to extract the characteristic of the waveform as an information element and to regard a timely change in the waveform as a pattern, thereby recognizing voice. That is, the voice recognition is executed so that reference patterns of voice related to words which have previously been analyzed and registered can be compared with a pattern obtained by analyzing an unknown input voice, to thusly find the most similar pattern from which the corresponding information element is then extracted.

The related art mobile communications terminal uses the voice recognition to analyze a user's voice and extracts an information element from the analyzed voice to thereafter use the extracted information in a phone number registration.

In the related art mobile communications terminal, a voice recognition apparatus is operated such that a user's voice is received to perform the voice recognition therefor, and a voice-recognized string is compared with a certain string, whereby if the two strings are equal to each other, a number extracted by recognizing the voice is displayed on a screen. However, in the related art voice recognition apparatus, the voice recognition is performed by receiving every voice (audio) signal generated during a call, and accordingly a load is generated in the mobile communications terminal, which causes a performance degradation and unnecessary voice recognition.

Furthermore, every voice is analyzed during the call and information related to the analyzed voice is stored, and thereby unnecessary information may also be stored. As a result, the mobile communications terminal having a limited processing capability may inefficiently use its memory or storage unit for the voice recognition operation.

US 2003/0045329 A1 discloses a method for processing a telephone call comprising the steps of: starting voice recognition of a telephone call conversation during the telephone call, transforming the conversation subjected to voice recognition into strings and storing the strings in the memory of the mobile terminal device, stopping voice recognition of the conversation during the telephone call, starting an e-mail application after the telephone call is completed, displaying these stored strings on a display unit, editing the display strings on the display unit and transmitting the added strings by e-mail.

US 6,813,601 B1 discloses a mobile communication system comprising a voice recognition system that converts spoken words into a sequence of letters and gaps. An encoder is used to code the letters into a digital message. A transmitter is used to transmit the digital message to a receiver or a mobile communication link. The receiver is used to decode the digital message and a speech synthesizer is used to convert the decoded message into spoken words.

US 2005/0065791 A1 discloses that a base station receives a speech recognition notification request message from a mobile phone. The base station recognizes a speech recognition and character data display mode of the mobile phone and transmits a corresponding pre-recorded voice information message to the caller to allow the caller to record his message by voice. When the caller selects speech recording, the base station performs the speech recording function, that is, the base station recognizes the speech of the caller and converts the voice data to character data and transmits the character data in form of a short message to the corresponding receiving mobile phone.

WO 02/077975 A1 proposes to simplify the inputting of text for a message service for a mobile phone by voice Input that is processed in a speech recognition unit and compared with predefined text patterns stored in a memory means. A predefined text pattern which is the closest match to the text being selected is displayed. Once it has been confirmed, it is used as the text for the text message to be sent At least partly firmly predefined texts are stored as text patterns. Generally only a small number of text messages are stored in the form of text patterns with which the spoken texts are to be compared.

### SUMMARY OF THE INVENTION

Therefore, an object of the present invention is to provide a device and method for sending and receiving voice call contents which is capable of storing and sending voice information inputted during a call, if necessary.

The object of the invention is achieved by a device according to claim 1 and a method according to claim 4. An exemplary device for sending and receiving voice call contents comprises: a first mobile communications terminal for converting voice call contents into text information and sending the converted text information; and a second mobile communications terminal for receiving the text information from the first mobile communications terminal and storing the received text information.

EP 1 187 431 A1 discloses a portable terminal comprising an automatic speech recognizer for accessing an internal or external reference database, a processing unit for searching at least one matching string among the plurality of strings on the basis of one or more alphanumerical characters recognized by the automatic speech recognizer, and a signaling unit for outputting a start spelling request and/or a continue spelling request after a user speaks the command word "SPELL".

EP 1 324 314 A1 discloses a voice recognition system for entering short messages by dictating to a mobile telecommunication terminal. For voice recognition the system uses a voice recognition module capable for multiple user voice recognition, a converter for converting voice to text, an addition voice recognition module capable of user specific voice recognition, and a vocabulary module capable of completing vocabulary.

US 2002/055844 A1 discloses a handheld electronic device such as a personal digital assistant (PDA) which has multiple application processes. A speech recognition process integrated in the device takes input speech from a user and produces a recognition output representative of the input speech. A text-to-speech process takes output text and produces a representative speech output. A speech manager interface allows the speech recognition process and the text-to-speech process to be accessed by other application processes.

Another device for sending voice call contents comprises: a keypad having a voice recognition button; and a controller for analyzing voice inputted by activating a voice recognition function by operating the voice recognition button during a call, and for then sending text information corresponding to the analyzed voice to another party's mobile communications terminal.

An exemplary method for sending and receiving voice call contents comprises: converting voice inputted during a call into text information and thereafter sending the converted text information to another party's mobile communications terminal; and receiving and storing the text information in the another party's mobile communications terminal.

Another method for sending and receiving voice call contents comprises: activating a voice recognition function by operating a voice recognition button; and converting voice inputted during a call into text information in the state that the voice recognition function has been activated to thus send the converted text information to another party's mobile communications terminal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is an exemplary view schematically illustrating a device for sending and receiving voice call contents in accordance with an embodiment of the present invention;
Fig. 2 is a block diagram illustrating a configuration of a device for sending and receiving voice call contents in accordance with an embodiment of the present invention;
Fig. 3 is an exemplary view illustrating a position of a voice recognition button provided on a keypad;
Fig. 4 is an exemplary view implementing a voice recognition button as a soft button;
Fig. 5 is a flowchart illustrating a method for sending and receiving voice call contents in accordance with an embodiment of the present invention; and
Fig. 6 is an exemplary view illustrating a screen conversion by a voice recognition in accordance with an embodiment of the present invention.

### DETAILED DESCRIPTION OF THE INVENTION

Call comments may denote voice call contents transmitted and received between mobile communications terminals during a call.

Description will now be given in detail of the present invention, with reference to the accompanying drawings.

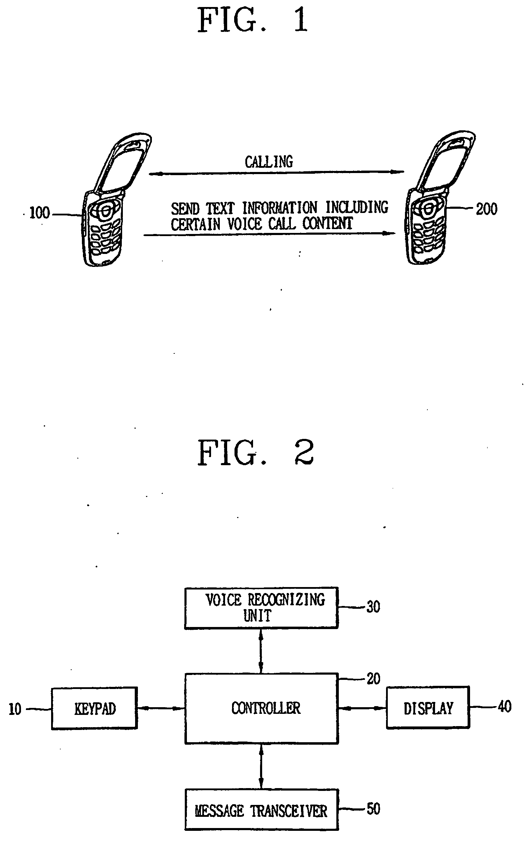

Fig. 1 is an exemplary view schematically illustrating a device for sending and receiving voice call contents in accordance with an embodiment of the present invention.

As illustrated in Fig. 1, first and second mobile communications terminals 100 and 200 are in a call state. Here, a user of the first mobile communications terminal 100 or of the second mobile communications terminal 200 sends certain voice call contents in a format of text information during the call.

For example, when the first mobile communications terminal 100 sends voice call contents to desirably send to the second mobile communications terminal 200 in a format of text information, the first mobile communications terminal 100 sends to the second mobile communications terminal 200 voice call contents in the text information from a voice recognition function being activated to the voice recognition function being deactivated. The text information may preferably be able to be sent by using a short messaging service.

Then, the text information sent from the first mobile communications terminal 100 is received and stored in the second mobile communications terminal 200. Here, the second mobile communications terminal 200 receives text information and displays the received text information, which is similar to an operation for receiving and displaying typical short messages, explanation for which will thusly be omitted.

Fig. 2 is a block diagram illustrating a configuration of a device for sending and receiving voice call contents in accordance with an embodiment of the present invention.

As illustrated in Fig. 2, a keypad 10 is provided with keys for inputting numerals and text information and function buttons for setting various functions. The keypad 10 also has a voice recognition button.

A controller 20 controls an overall operation of the mobile communications terminal. The controller 20 analyzes by use of a voice recognizing unit 30 voice call contents inputted during a call in a state that a voice recognition function has been activated by operating the voice recognition button. The controller 20 then controls an overall operation of the mobile communications terminal to send text information corresponding to the analyzed voice to another party's mobile communications terminal. The controller 20 also controls an operation for composing a message including the text information to then send it to the other party's terminal. In addition, the controller 2o may include the voice recognizing unit 30 and a message transceiver 50.

The voice recognizing unit 30 analyzes voice during a call in a state that the voice recognition function has been activated.

A display 40 displays messages generated while performing a program under control of the controller 20. The display 40 also displays user data according to an operation of the mobile communications terminal. In addition, the display 40 displays screen data according to a process for composing and sending a message including text information by use of the voice recognition function. The display 40 also displays a message including text information received from the other party's terminal. The received message denotes a message including text information corresponding to voice recognized during the call. Here, a Liquid Crystal Display (LCD) may commonly be used as the display 40. In this case, the display 40 may include an LCD controller, a memory for storing image data and an LCD device. Here, when the LCD may be implemented in a touch screen manner, the keypad 10 and the LCD may be used as an input unit.

The message transceiver 50 is used to send the message to the other party's terminal or to receive a message sent by the other party's terminal.

When the voice recognition function is activated by operating a voice recognition button, the mobile communications terminal having such configuration composes a message including text information corresponding to the recognized voice to send it to the other party's terminal.

The mobile communications terminal has the voice recognition button on the keypad 10. When the voice recognition button on the keypad 10 is entered, the voice recognition function is activated. However, upon entering the voice recognition button in a state that the voice recognition function has been activated, the voice recognition function is deactivated. The keypad 10 outputs key data generated by entering the voice recognition button to the controller 20. The conversion of activation/deactivation of the voice recognition function depends on the state of the voice recognition function.

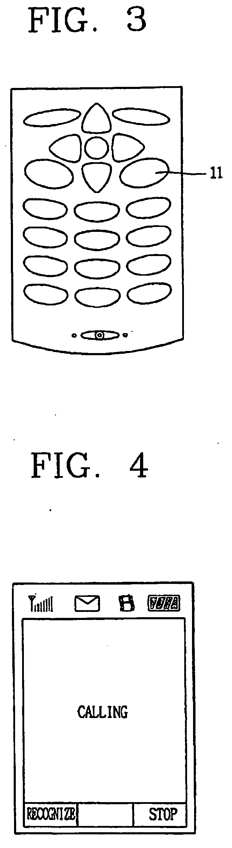

Fig. 3 is an exemplary view illustrating a position of a voice recognition button provided on a keypad.

As illustrated in Fig. 3, a voice recognition button 11 provided on the keypad 10 is allocated to one of function buttons to thus make it convenient to use the voice recognition button 11 during a call. The voice recognition button 11 may be represented by displaying a hot logo on the voice recognition button 11. Also, the voice recognition button 11 may be arranged at a position where it does not interrupt the call to conveniently operate the button during the call.

Instead of arranging the voice recognition button 11 on the keypad 10, a side key may be used as the voice recognition button 11.

In another embodiment, the voice recognition button may not be arranged on the keypad 10 of the mobile communications terminal, but a voice recognition soft button may rather be displayed at a lower end of a call screen to activate/deactivate the voice recognition function by operating the soft button.

Fig. 4 is an exemplary view implementing a voice recognition button as a soft button.

As illustrated in Fig. 1, a mobile communications terminal displays a voice recognition menu at a lower end of a call screen. When the voice recognition menu is selected by operating the soft button, the mobile communications terminal executes the voice recognition during a call. Upon executing the voice recognition, the mobile communications terminal displays the recognition stopping menu at the lower end of the call screen.

It is assumed that a user enters the voice recognition button 11 in a call state with another party, and converts his voice into text information to send a message including the converted text information to the other party.

When it is certified that the user has entered the voice recognition button 11 on the keypad 10 of the mobile communications terminal, a voice recognition request is transferred to the controller 20. The controller 20 then receives the voice recognition request and sends a voice recognition activation signal to the voice recognizing unit 30.

The controller 20 then displays on the display 40 that the voice recognition function has been activated, and displays a voice recognition activation message on a screen. In another embodiment, the controller 20 may output through a speaker a signal (e.g., a sound, a message, etc.) indicating that the voice recognition has been activated to thus inform it to the user.

The voice recognizing unit 30 analyzes a waveform of the user's voice by the voice recognition activation signal and compares the analyzed waveform characteristic with a reference pattern, to thus extract text information. The voice recognizing unit 30 then transfers the extracted text information to the display 40 to display the text information on a screen by the display 40. The user confirms the text information displayed on the screen to be informed of the result of the voice recognition.

Afterwards, it is assumed that the user stops the voice recognition function by entering the voice recognition button 11 and transfers text information to the other party.

When it is certified that the voice recognition button 11 on the keypad 10 has been entered in the activated state that the voice recognition function, a voice recognition stopping request is transferred to the controller 20. The controller 20 receives the voice recognition stopping request and transfers a voice recognition deactivation signal to the voice recognizing unit 30.

When receiving the voice recognition deactivation signal, the voice recognizing unit 30 stores the voice-recognized text information in a storage unit. The controller 20 informs the display 40 and the message transceiver 50 that the voice recognition function has been deactivated. The display 40 displays a voice recognition deactivation message on the screen. The controller 20 outputs a voice recognition deactivation message through the speaker rather than the deactivation message on the screen, to inform the user of the voice recognition stopping.

The message transceiver 50 composes a message including the text information voice-recognized by the voice recognizing unit 30, and sends it to the other party's terminal currently in the call state.

The message transceiver 50 displays the message received from the other party's terminal on the screen to output the voice-recognized text information. The message transceiver 50 certifies a phone number of the other party's terminal currently in the call state, and designates the phone number as a target to which a message is to be sent. The message transceiver 50 then sends the message including the voice-recognized text information.

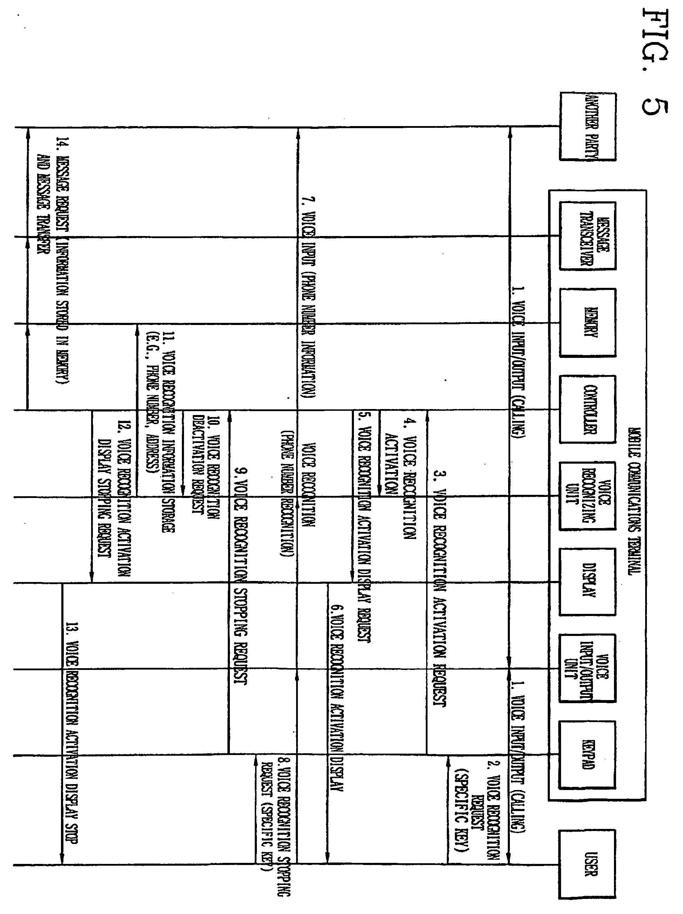

Fig. 5 is a flowchart illustrating a method for sending and receiving voice call contents in accordance with an embodiment of the present invention.

As illustrated in Fig. 5, a method for sending and receiving voice call contents in accordance with an embodiment of the present invention may comprise activating/deactivating a voice recognition function by entering a voice recognition button, executing a voice recognition by receiving a user's voice in an activated state of the voice recognition function, displaying a voice recognition executing message on a call screen upon executing the voice recognition, stopping the voice recognition when it is certified that a voice recognition button has been entered in the activated state of the voice recognition, storing voice-recognized text information in a memory and displaying on a screen that the voice recognition has been deactivated, and composing a message including the voice-recognized text information to send it to another party's terminal currently in a call state.

The method for sending and receiving voice call contents will now be explained in detail. In order to explain in detail the steps, it may be assumed that a user is being communicated with another party and the user uses a voice recognition function when sending his phone number information to the another party.

The mobile communications terminal may regarded as the controller 20 for controlling the overall operation of the mobile communications terminal herebelow.

First, when it is certified that a voice recognition button has been entered during a call in the mobile communications terminal, a voice recognition function is activated. When the voice recognition button is entered in the activated state of the voice recognition function, the voice recognition function is deactivated.

That is, by pressing the voice recognition button, the mobile communications terminal controls the conversion into the activation and deactivation of the voice recognition function, so as to initiate or stop the voice recognition.

In order for the user to enter the voice recognition button while he is calling without stopping the call, the voice recognition button is arranged in a function button to make it convenient to use the voice recognition button during the call. In addition, the voice recognition button may be represented by displaying a hot logo on the voice recognition button, and the user confirms the position of the voice recognition button by the hot logo displayed on the keypad.

In another embodiment, the voice recognition button may not be arranged on the keypad 10 of the mobile communications terminal, but a voice recognition soft button may rather be displayed at a lower end of a call screen to activate/deactivate the voice recognition function by operating the soft button.

When a call connection is successfully performed between a user and another party, the mobile communications terminal displays a voice recognition soft button at a lower end of a call screen, and activates or deactivates the voice recognition function by determining whether the soft button has been inputted.

In still another embodiment, the mobile communications terminal activates the voice recognition function by determining whether the voice recognition button has been entered longer than a certain time, and deactivates the voice recognition function by pressing a voice recognition stopping button. In order to prevent an erroneous input of the voice recognition button during the call, the mobile communications terminal determines whether the voice recognition button has been entered (pressed) longer than a certain time. If it has been pressed longer than the certain time, the mobile communications terminal activates the voice recognition function.

It is assumed that the user enters the voice recognition button while being communicating with the other party and converts his voice into text information to thereafter send a message including the converted text information to the other party. The user activates the voice recognition function by entering the voice recognition button before speaking his phone number to notify it to the another party.

The mobile communications terminal confirms whether the voice recognition button has been entered. If it is confirmed that the voice recognition button has been entered, the mobile communications terminal activates the voice recognition function to execute the voice recognition by receiving the user's voice. Upon executing the voice recognition, the mobile communications terminal displays a voice recognition executing message on the call screen. The mobile communications terminal, in another embodiment, informs the user of the execution of the voice recognition by outputting a signal (or a sound, a message, etc.) indicating the execution of the voice recognition.

The mobile communications terminal displays a time taken by executing the voice recognition from the moment when the voice recognition is initiated, and then displays on the screen the voice-recognized result obtained during the voice recognition being executed. The mobile communications terminal analyzes a waveform of the user's voice, and compares the characteristic of the analyzed waveform with a reference pattern, thereby extracting text information. The mobile communications terminal then displays the extracted text information on a screen. The user confirms the text information displayed on the screen to acknowledge the voice recognition result.

It is then assumed that the user stops the voice recognition by entering the voice recognition button during the voice recognition being executed, and sends the voice-recognized result to the other party.

The mobile communications terminal stops the voice recognition when the voice recognition button is entered in the activated state of the voice recognition function. Here, the mobile communications terminal displays on the screen that the voice recognition function has been deactivated, and stores the voice-recognized text information in the memory. The mobile communications terminal, in another embodiment, outputs a voice recognition deactivation message through a speaker rather than outputting the deactivation message onto the screen, thereby informing the user of the voice recognition stopping.

Afterwards, the mobile communications terminal composes a message including the voice-recognized text information and sends it to the other party's terminal currently in the call state. That is, the mobile communications terminal sends the message including the text information to the phone number of the other party's terminal currently in the call state.

Then, the other party's terminal displays the received message on the screen and outputs the voice-recognized text information.

Instead of sequentially performing deactivating the voice recognition function, storing the voice-recognized text information in the memory, informing the deactivation message to the user, and composing the message including the text information to send it to the other party's terminal, the mobile communications terminal may previously send the message and then deactivate the voice recognition function. For example, the mobile communications terminal previously sends the message including the voice-recognized text information, and then performs the operation of deactivating the voice recognition function.

In another embodiment, when the stopping button is entered while the voice recognition is being executed, the mobile communications terminal composes the message including the voice-recognized text information and sends it to the other party's terminal to thereafter deactivate the voice recognition function. The mobile communications terminal then stores the text information in the storage unit (i.e. the memory) and displays on the screen that the voice recognition function has been deactivated. The mobile communications terminal composes the message including the voice-recognized text information immediately when receiving a request for stopping the voice recognition, and accordingly the mobile communications terminal can fast send the voice recognition result to the other party's terminal.

In still another embodiment, the mobile communications terminal deactivates the voice recognition function by entering the stopping button in the activated state of the voice recognition, stores the voice-recognized text information in the storage unit, composes and sends the message including the text information, and then displays on the screen that the voice recognition function has been deactivated. The mobile communications terminal composes and sends the message including the text information from the initiation of the voice recognition to the stopping thereof, and accordingly can correctly transfer the result of the voice recognition executed for a time duration for which the voice recognition is activated to the other party's terminal.

The mobile communications terminal may execute the voice recognition for the other party's voice rather than the user's voice and store the voice recognition result in the storage unit to thus allow the user to utilize it, embodiment for which will now be explained.

The mobile communications terminal may have a user voice recognition button and a separate other party voice recognition button as soft buttons. When it is confirmed that the other party voice recognition button has been entered, the mobile communications terminal inputs the other party's voice to execute the voice recognition therefor. The mobile communications terminal stops the voice recognition for the other party's voice according to a voice recognition stopping request, and stores the voice recognition result in the memory. The user completes his call and utilizes the voice recognition result stored in the memory to extract useful data included in the voice call content.

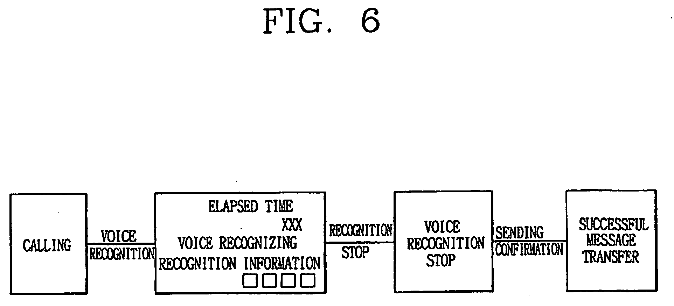

Fig. 6 is an exemplary view illustrating a screen conversion by a voice recognition in accordance with an embodiment of the present invention.

As illustrated in Fig. 6, the voice recognition screen is used to inform the user of the initiation of the voice recognition and to output an elapsed time for the voice recognition being executed and a voice recognition result. An operational state of the voice recognition during the call is displayed on the voice recognition screen to thus display whether the voice recognition is correctly being performed. The voice recognition screen is also used to previously display the voice recognition result to be transferred to the other party so as to prevent an erroneous information sending.

When stopping the voice recognition and sending the voice recognition result to the other party in a message format, a sent state of the message is displayed on the voice recognition screen to enable a confirmation of whether the message has correctly been sent. Whether the message has correctly been sent is displayed on the voice recognition screen, and accordingly the message may be modified, thereby preparing an incorrect sending of the message, resulting in enabling a determining whether to re-send the message.

When storing the voice recognition result in the storage unit, a file name for the voice recognition result is displayed on the voice recognition screen. Accordingly, the user can refer to the file name to be able to use the voice recognition result.

As described above, in the present invention, the voice recognition for the user's voice is performed, when necessary, during the call, the voice recognition result can be transferred to the other party in the message format. Accordingly, the other party can receive part of the voice call content, and check the message after terminating the call, thereby certifying the voice recognition result. In addition, the voice recognition can be activated by the voice recognition request to thereafter be performed, when necessary, whereby it is efficient to prevent an unnecessary execution of the voice recognition and to improve performance of the terminal by efficiently managing the processing capability of the terminal. Furthermore, although the other party's terminal does not support the voice recognition, the voice recognition result can be sent from the user's terminal to the other party's terminal as the message, and accordingly the other party can receive the voice-recognized voice call content from the user. Also, by storing the typical text information as well as the phone number during the call therebetween, the user can open the stored information after terminating the call to thus reconfirm an important part of the voice call content.

As the present invention may be embodied in several forms without departing from the spirit or essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A device (100) for sending voice call contents, comprising:
a display (40) for displaying at least one soft button for activating or deactivating a voice recognition for a user's voice or another party's voice; and
a controller (20) adapted to activate or deactivate the voice recognition for the user's voice or the other party's voice according to an input of the soft button, output a notification sound for notifying the activation of the voice recognition when the voice recognition (30) is activated during a call with the other party, convert voice inputted during the call into text information, and display the converted text information when the voice recognition is activated;
wherein the controller (20) is further adapted to output another notification sound for notifying the deactivation of the voice recognition (30) when the voice recognition is deactivated, convert the text information into a text message, and send the text message to the other party's mobile communications terminal (200).

2. The device of claim 1, wherein the display is adapted to display an activation or a deactivation state of the voice recognition, and display the text information recognized when the voice recognition is activated.

3. The device of claim 1, further comprising a memory adapted to store the text information for sending the message after the voice recognition function is deactivated.

4. A method for sending and receiving voice call contents, comprising the steps of:
displaying a soft button for activating or deactivating a voice recognition for a user's voice or another party's voice;
activating or deactivating the voice recognition for the user's voice or another party's voice according to an input of a soft button;
outputting a notification sound for notifying the activation of the voice recognition when the voice recognition (30) is activated during a call with the other party;
converting voice inputted during a call into text information and displaying the converted text information when the voice recognition is activated;
outputting a notification sound for notifying the deactivation of the voice recognition when the voice recognition is deactivated; and
converting the text information into a text message and sending the text message to the other party's mobile communications terminal (200).

5. The method of claim 4, wherein the sending of the text message to the other party's mobile communications terminal (200) comprises the steps of:
requesting a user confirmation whether to send the converted text message; and
sending the text message to the other party's mobile communications terminal (200) when it is confirmed that the user desires to send the text message.

6. The method of claim 4, wherein converting the text information into the text message comprises:
storing the text information for sending the message after the voice recognition function is deactivated; and
displaying a file name of the stored text information for the user's reference.

## Patentansprüche

1. Gerät (100) zum Senden von Sprachanrufinhalten, umfassend:
eine Anzeige (40) zum Anzeigen zumindest einer Softtaste zum Aktivieren oder Deaktivieren einer Spracherkennung für die Sprache eines Benutzers oder die Sprache einer anderen Partei; und
eine Steuerung (20), die dazu ausgebildet ist, die Spracherkennung für die Sprache des Benutzers oder die Sprache der anderen Partei gemäß einer Eingabe der Softtaste zu aktivieren oder zu deaktivieren, ein Benachrichtigungsgeräusch zum Benachrichtigen der Aktivierung der Spracherkennung auszugeben, wenn die Spracherkennung (30) während eines Anrufs mit der anderen Partei aktiviert wird, während des Anrufs eingegebene Sprache in Textinformation zu konvertieren, und die konvertierte Textinformation anzuzeigen, wenn die Spracherkennung aktiviert ist;
wobei die Steuerung (20) ferner dazu ausgebildet ist, ein anderes Benachrichtigungsgeräusch zum Benachrichtigen der Deaktivierung der Spracherkennung (30) auszugeben, wenn die Spracherkennung deaktiviert ist, die Textinformation in eine Textnachricht zu konvertieren, und die Textnachricht an ein Mobilkommunikationsendgerät (200) der anderen Partei zu senden.

2. Gerät nach Anspruch 1, wobei die Anzeige dazu ausgebildet ist, einen Aktivierungs- oder einen Deaktivierungszustand der Spracherkennung anzuzeigen und die erkannte Textinformation anzuzeigen, wenn die Spracherkennung aktiviert ist.

3. Gerät nach Anspruch 1, ferner umfassend einen Speicher, der dazu ausgebildet ist, die Textinformation zum Senden der Nachricht zu speichern nachdem die Spracherkennungsfunktion deaktiviert worden ist.

4. Verfahren zum Senden und Empfangen von Sprachanrufinhalten, umfassend die Schritte:
Anzeigen einer Softtaste zum Aktivieren oder Deaktivieren einer Spracherkennung für die Sprache eines Benutzers oder die Sprache einer anderen Partei;
Aktivieren oder Deaktivieren der Spracherkennung für die Sprache des Benutzers oder die Sprache der anderen Partei gemäß einer Eingabe einer Softtaste;
Ausgeben eines Benachrichtigungsgeräuschs zum Benachrichtigen der Aktivierung der Spracherkennung, wenn die Spracherkennung (30) während eines Anrufs mit der anderen Partei aktiviert wird;
Konvertieren von während eines Anrufs eingegebener Sprache in Textinformation und Anzeigen der konvertierten Textinformation, wenn die Spracherkennung aktiviert ist;
Ausgeben eines Benachrichtigungsgeräuschs zum Benachrichtigen der Deaktivierung der Spracherkennung, wenn die Spracherkennung deaktiviert ist; und
Konvertieren der Textinformation in eine Textnachricht und Senden der Textnachricht an ein Mobilkommunikationsendgerät (200) der anderen Partei.

5. Verfahren nach Anspruch 4, wobei das Senden der Textnachricht an das Mobilkommunikationsendgerät (200) der anderen Partei die Schritte umfasst:
Anfragen einer Benutzerbestätigung, ob die konvertierte Textnachricht zu senden ist; und
Senden der Textnachricht an das Mobilkommunikationsendgerät (200) der anderen Partei, wenn es bestätigt wird, dass der Benutzer wünscht, die Textnachricht zu senden.

6. Verfahren nach Anspruch 4, wobei das Konvertieren der Textinformation in die Textnachricht umfasst:
Speichern der Textinformation zum Senden der Nachricht nachdem die Spracherkennungsfunktion deaktiviert wurde; und
Anzeigen eines Dateinamens der gespeicherten Textinformation als Referenz für den Benutzer.

## Revendications

1. Dispositif (100) destiné à envoyer des contenus d'appels vocaux, comprenant :
un affichage (40) destiné à afficher au moins un bouton programmable destiné à activer ou à désactiver une reconnaissance vocale de la voix d'un utilisateur ou de la voix d'un autre interlocuteur ; et
un contrôleur (20) adapté pour activer ou désactiver la reconnaissance vocale pour la voix de l'utilisateur ou la voix de l'autre interlocuteur conformément à une entrée du bouton programmable, délivrer en sortie une notification sonore destinée à notifier l'activation de la reconnaissance vocale lorsque la reconnaissance vocale (30) est activée pendant un appel avec l'autre interlocuteur, convertir la voix délivrée en entrée pendant l'appel en informations textuelles, et afficher les informations textuelles converties lorsque la reconnaissance vocale est activée ;
dans lequel le contrôleur (20) est en outre adapté pour délivrer en sortie une autre notification sonore destinée à notifier la désactivation de la reconnaissance vocale (30) lorsque la reconnaissance vocale est désactivée, convertir les informations textuelles en un message texte, et envoyer le message texte vers le terminal de communication mobile (200) de l'autre interlocuteur.

2. Dispositif selon la revendication 1, dans lequel l'affichage est adapté pour afficher un état d'activation ou de désactivation de la reconnaissance vocale, et afficher les informations textuelles reconnues lorsque la reconnaissance vocale est activée.

3. Dispositif selon la revendication 1, comprenant en outre une mémoire adaptée pour mémoriser les informations textuelles pour envoyer le message après que la fonction de reconnaissance vocale a été désactivée.

4. Procédé destiné à envoyer et recevoir des contenus d'appels vocaux, comprenant les étapes consistant à :
afficher un bouton programmable destiné à activer ou à désactiver une reconnaissance vocale pour la voix d'un utilisateur ou la voix d'un autre interlocuteur ;
activer ou désactiver la reconnaissance vocale pour la voix de l'utilisateur ou la voix d'un autre interlocuteur conformément à une entrée d'un bouton programmable ;
délivrer en sortie une notification sonore destinée à notifier l'activation de la reconnaissance vocale lorsque la reconnaissance vocale (30) est activée pendant un appel avec l'autre interlocuteur ;
convertir la voix délivrée en entrée pendant un appel en informations textuelles et afficher les informations textuelles converties lorsque la reconnaissance vocale est activée ;
délivrer en sortie une notification sonore destinée à notifier la désactivation de la reconnaissance vocale lorsque la reconnaissance vocale est désactivée ; et
convertir les informations textuelles en un message texte et envoyer le message texte vers le terminal de communication mobile (200) de l'autre interlocuteur.

5. Procédé selon la revendication 4, dans lequel l'envoi du message texte vers le terminal de communication mobile (200) de l'autre interlocuteur comprend les étapes consistant à :
demander une confirmation à l'utilisateur si le message texte converti doit être envoyé ; et
envoyer le message texte vers le terminal de communication mobile (200) de l'autre interlocuteur lorsqu'il est confirmé que l'utilisateur souhaite envoyer le message texte.

6. Procédé selon la revendication 4, dans lequel la conversion des informations textuelles en message texte comprend les étapes consistant à :
mémoriser les informations textuelles pour envoyer le message après que la fonction de reconnaissance vocale a été désactivée ; et
afficher un nom de fichier des informations textuelles mémorisées pour la référence de l'utilisateur.
